# DEMANDE DE BREVET EUROPEEN

(11) **EP 0 936 712 A1**
(43) Date de publication de la demande: **18.08.1999**
(21) Numéro de dépôt: 99400333.3
(22) Date de dépôt: 11.02.1999
(51) Int. Cl.: H02B 1/44, E05B 17/20

(54) **Verrou pour panneau mobile, en particulier pour plastron d'enveloppe électrique et panneau mobile correspondant**

(30) Priorité: 12.02.1998 FR 9801686
(71) Demandeur: LEGRAND, F-87000 Limoges (FR); LEGRAND SNC, F-87000 Limoges (FR)
(72) Inventeur: Le Bihan, Loîc, 76000 Rouen (FR)
(74) Mandataire: CABINET BONNET-THIRION

(57) **Abrégé**

Ce verrou (14) est du genre comportant un moyeu (21), qui est à engager de manière rotative dans un perçage (22) du panneau (11) concerné, du côté interne de celui-ci, et un pêne, qui, solidaire de ce moyeu (21), fait saillie radialement sur ce dernier.

Suivant l'invention, il comporte, en outre, une chape (24), qui est à engager sur le panneau (11) par la tranche de celui-ci, et dont les deux branches (25A, 25B) comportent, chacune, en correspondance l'une avec l'autre, un évidement (26A, 26B) de contour circulaire par lequel elles sont chacune aptes à former un palier pour le moyeu (21).

Application, notamment, aux plastrons pour enveloppes électriques.

## Description

La présente invention concerne d'une manière générale les verrous mis en oeuvre pour l'assujettissement au moins local d'un quelconque panneau mobile à un quelconque dormant.

Elle vise plus particulièrement, mais non nécessairement exclusivement, le cas où ce panneau mobile forme un plastron dans une quelconque enveloppe électrique, telle que, par exemple, un coffret ou une armoire.

Ainsi qu'on le sait, il est usuel d'équiper certaines enveloppes électriques, et cela est le cas notamment de celles mises en oeuvre pour le logement d'appareils électriques de distribution, d'au moins un plastron, qui recouvre pour l'essentiel certains au moins des appareils électriques qu'elles contiennent, en interdisant, notamment, pour des raisons de sécurité, un quelconque accès à la partie sous tension de ces appareils électriques, et dont seule fait saillie, à la faveur d'une fenêtre, la partie de ces appareils électriques qui doit rester accessible à l'utilisateur.

Ainsi qu'on le sait, également, un tel plastron est le plus souvent mobile, pour que, à la demande, et sur une intervention spécifique, un accès reste malgré tout possible aux appareils électriques qu'il recouvre, soit qu'il puisse être désolidarisé du dormant correspondant sur un seul de ses côtés, en pivotant sur ce dormant à la manière du battant d'une porte du côté opposé au précédent, soit qu'il puisse être désolidarisé du dormant sur l'un et l'autre de ces côtés, en étant alors totalement amovible.

Dans l'un et l'autre cas, ce plastron est au moins localement assujetti au dormant par un verrou.

La présente invention vise plus particulièrement, encore, le cas où ce verrou comporte un moyeu, qui est à engager de manière rotative dans un perçage du plastron concerné, ou, d'une manière plus générale, du panneau à équiper, du côté interne de celui-ci, et un pêne, qui, solidaire de ce moyeu, fait saillie radialement sur ce dernier, pour pouvoir venir se prendre sous le dormant correspondant.

Le plus souvent, à ce jour, ce verrou se complète simplement par une tête de commande, qui, engagée sur le moyeu à partir du côté externe du plastron concerné, est bloquée en rotation sur ce moyeu et assure le maintien axial de celui-ci sur le plastron.

Cette disposition a donné et peut encore donner satisfaction.

Mais, à l'usage, elle présente des inconvénients, qui sont les suivants.

Tout d'abord, pour que la tenue du verrou sur le plastron soit satisfaisante, il importe que les tolérances de fabrication correspondantes soient assez réduites, tant en ce qui concerne celles intervenant dans le montage rotatif du verrou sur le plastron qu'en ce qui concerne celles intervenant dans son maintien axial sur celui-ci.

Il en résulte, inévitablement, une certaine dureté dans la commande du verrou.

Par suite, l'empreinte que comporte la tête de commande de ce verrou pour en permettre la manoeuvre se détériore assez rapidement, au risque de le rendre inutilisable, et, donc, au risque de rendre indémontable le plastron.

En outre, la tenue du plastron sur son dormant, qui dépend du ou des verrous qui l'équipent, peut s'avérer insuffisante, notamment lors d'éventuels courts-circuits sur les appareils électriques disposés à l'arrière.

Il n'est pas rare, en effet, que, lors d'essais de courts-circuits, le plastron soit éjecté, notamment, lorsque, s'agissant d'un plastron en matière synthétique, le ou les verrous équipant ce plastron sont eux-mêmes en matière synthétique.

La présente invention a d'une manière générale pour objet une disposition permettant d'éviter ces inconvénients.

De manière plus précise, elle a tout d'abord pour objet un verrou pour panneau mobile, en particulier pour enveloppe électrique, ce verrou étant du genre comportant un moyeu, qui est à engager de manière rotative dans un perçage du panneau à équiper, du côté interne de celui-ci, et un pêne, qui, solidaire de ce moyeu, fait saillie radialement sur ce dernier, et étant d'une manière générale caractérisé en ce qu'il comporte, en outre, une chape, qui est à engager sur le panneau, par la tranche de celui-ci, et dont les deux branches comportent, chacune, en correspondance l'une avec l'autre, un évidement de contour circulaire par lequel elles sont chacune aptes à former un palier pour le moyeu ; elle a encore pour objet tout panneau mobile, et en particulier tout plastron pour enveloppe électrique, équipé d'au moins un tel verrou.

Grâce à la chape mise en oeuvre, le moyeu du verrou suivant l'invention se trouve avantageusement guidé en rotation par deux paliers, qui interviennent à distance l'un de l'autre, et qui en améliorent sensiblement la tenue et les conditions de fonctionnement.

Les tolérances de fabrication peuvent, de ce fait, être moins rigoureuses, au bénéfice d'une plus grande facilité de manoeuvre, et l'empreinte que comporte sa tête de commande pour en permettre la manoeuvre se trouve ainsi avantageusement ménagée.

En outre, suivant un développement de l'invention, il peut avantageusement être tiré parti de la chape mise en oeuvre pour affermir la tenue de l'ensemble sur le dormant.

Pour ce faire, cette chape présente, en saillie, sur la surface externe de sa branche interne, au voisinage de sa partie médiane, une patte, par laquelle elle est apte à traverser le dormant, à la faveur d'un évidement prévu de manière usuelle sur celui-ci, et le pêne, qui intervient de l'autre côté du dormant, comporte, en correspondance avec cette patte, une rainure, par laquelle il est apte à s'engager sur cette patte.

Ainsi, au lieu de venir simplement en appui sur le dormant par son pêne, le verrou suivant l'invention se trouve en quelque sorte fermé en boucle sur ce dormant par ce pêne et sa chape, au bénéfice de la tenue du plastron sur ce dernier.

De fait, la résistance aux courts-circuits se trouve avantageusement renforcée.

Les caractéristiques et avantages de l'invention ressortiront d'ailleurs de la description qui va suivre, à titre d'exemple, en référence aux dessins schématiques annexés sur lesquels :

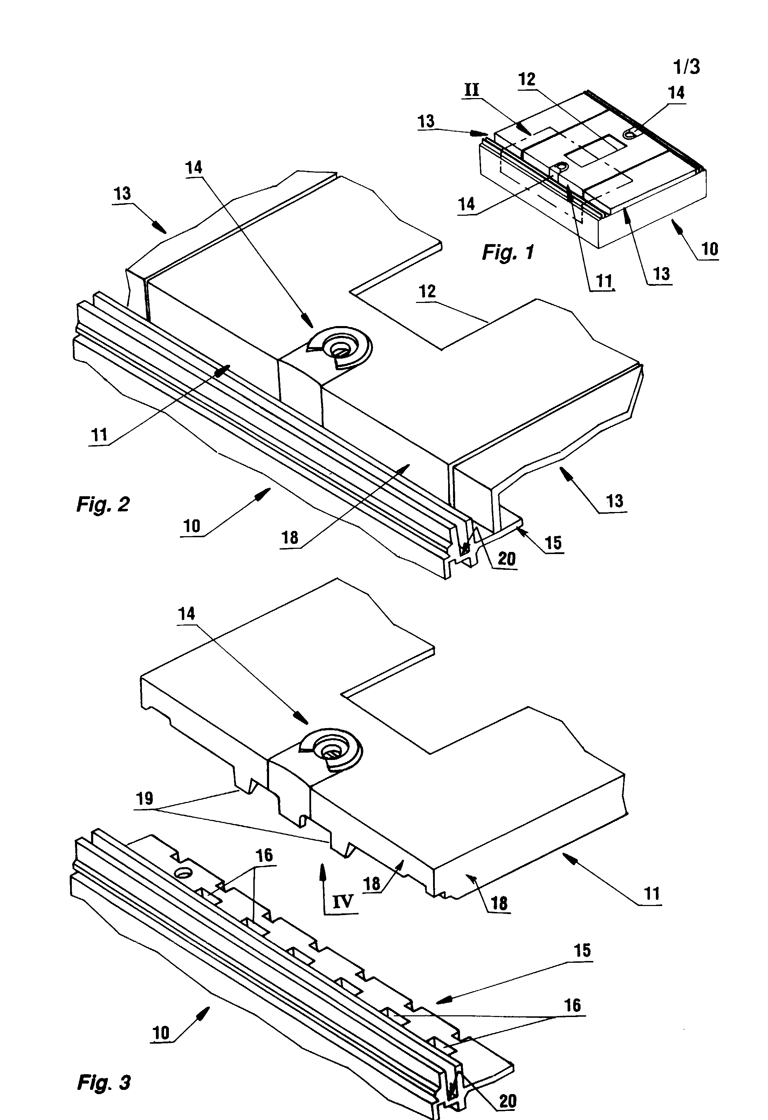

la figure 1 est, à échelle réduite, une vue en perspective relative, notamment, à un panneau équipé de verrous suivant l'invention, représenté en place sur un dormant ;
la figure 2 reprend, à échelle supérieure, le détail de la figure 1 repéré par un encart II sur cette figure 1 ;
la figure 3 est une vue partielle en perspective éclatée déduite de celle de la figure 2 ;
la figure 4 est une vue partielle en perspective du seul panneau, vu de l'arrière, suivant la flèche IV de la figure 3 ;
les figures 5A et 5B sont des vues partielles en perspective de ce panneau, vu de l'avant, et illustrent, chacune respectivement, deux phases successives de la mise en place d'un verrou suivant l'invention sur celui-ci ;
la figure 6 est, à échelle supérieure, une vue en perspective de la chape que comporte un tel verrou, vue de l'avant et de dessus;
la figure 7 est une autre vue en perspective de cette chape, vue de l'arrière et de dessous ;
la figure 8 est, sensiblement à l'échelle des figures 6 et 7, une vue en perspective du moyeu et du pêne de ce verrou, vus de dessus ;
la figure 9 est une vue en coupe longitudinale de l'ensemble, suivant la ligne IX-IX de la figure 8 ;
la figure 10 en est une vue partielle en coupe transversale, suivant la ligne X-X de la figure 8.

Ces figures illustrent, à titre d'exemple, l'application de l'invention à une enveloppe électrique 10, en l'espèce un coffret, comportant, en façade, au moins un panneau 11 formant un plastron, et, plus précisément, un plastron ajouré par une fenêtre 12 pour le passage de la partie saillante d'appareils électriques non représentés.

Dans la forme de réalisation représentée, le panneau 11 intervient entre deux panneaux 13, qui, eux, forment des plastrons pleins.

Une telle enveloppe électrique 10 étant bien connue par elle-même, et ne relevant pas, en propre, de la présente invention, elle ne sera pas décrite dans tous ses détails ici.

Il suffira d'indiquer que le panneau 11, au moins, est mobile, pour donner accès à son volume intérieur.

Dans la forme de réalisation représentée, le panneau 11 est plus précisément amovible.

Il est équipé, pour ce faire, de deux verrous 14, qui interviennent chacun respectivement dans la zone médiane de chacun de deux de ses côtés opposés, en l'espèce ses côtés transversaux, et qui permettent chacun de l'assujettir localement à un dormant 15 appartenant à l'enveloppe électrique 10.

Dans la forme de réalisation représentée, ce dormant 15 présente, de place en place, suivant un pas régulier, des évidements 16, qui, tous allongés en boutonnière suivant une même direction, sont alignés les uns avec les autres suivant cette direction.

Corollairement, le panneau 11 comporte, le long de chacun de ses côtés transversaux, un bord tombé 18, avec, en saillie sur la tranche de celui-ci, au moins un ergot 19 allongé à la manière des évidements 16 du dormant 15 et complémentaire de ceux-ci, pour son engagement dans un tel évidement 16.

Par exemple, et tel que représenté, deux ergots 19 sont prévus, à une distance l'un de l'autre qui est un multiple du pas des évidements 16 du dormant 15.

Dans la forme de réalisation représentée, le panneau 11 comporte aussi un bord tombé 18 le long de chacun de ses côtés longitudinaux, mais sans ergot 19.

Bien entendu, l'enveloppe électrique 10 peut, si désiré, se compléter par une porte, non représentée, propre à recouvrir l'ensemble des panneaux 11 et 13, et, dans la forme de réalisation représentée, il est d'ailleurs prévu, le long du dormant 15, une rainure 20 pour l'intervention d'une telle porte.

En pratique, les deux verrous 14 équipant le panneau 11 sont identiques l'un à l'autre, et ils interviennent dos à dos.

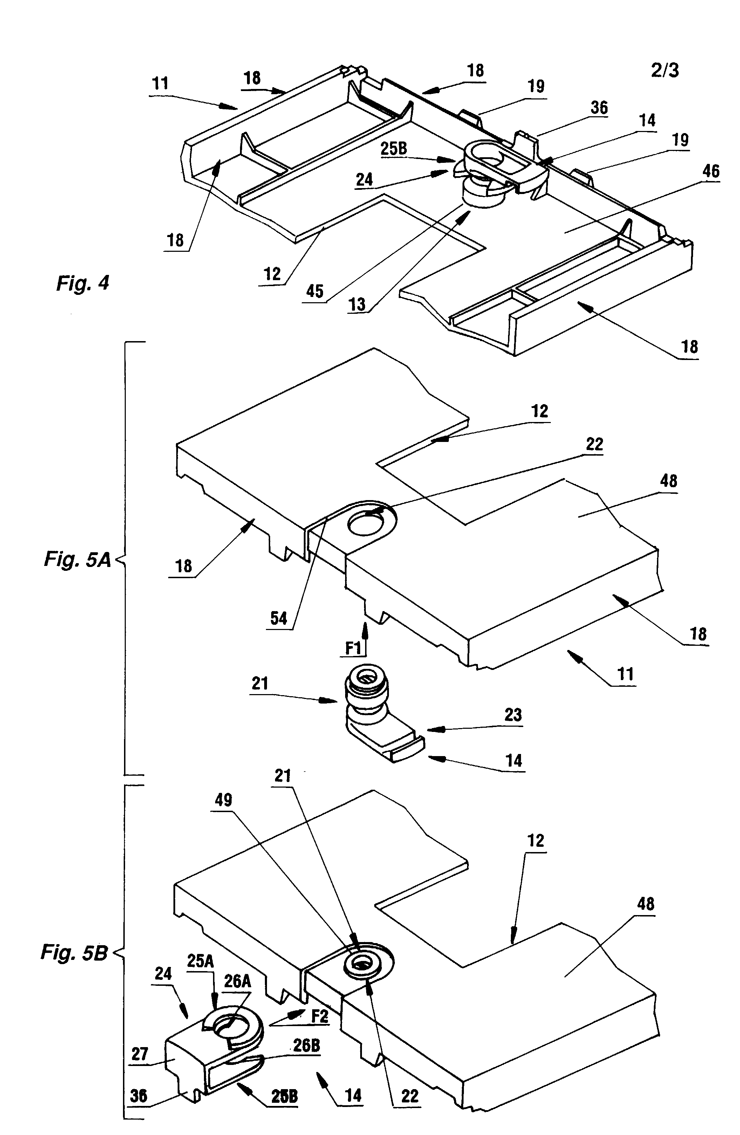

Chacun d'eux comporte, globalement, de manière connue en soi, un moyeu 21, qui est à engager de manière rotative dans un perçage 22 du panneau 11 à équiper, du côté interne de celui-ci, tel que schématisé par la flèche F1 sur la figure 5A, et un pêne 23, qui, solidaire de ce moyeu 21, fait saillie radialement sur ce dernier, pour venir se prendre sous la partie correspondante du dormant 15.

Suivant l'invention, chacun des verrous 14 comporte, en outre, une chape 24, qui, suivant la flèche F2 de la figure 5B, est à engager sur le panneau 11 à équiper, par la tranche de celui-ci, formée, en l'espèce, par son bord tombé 18 correspondant, et dont les deux branches 25A, 25B, l'une externe, l'autre interne, comportent, chacune, en correspondance l'une avec l'autre, un évidement 26A, 26B, de contour circulaire, par lequel elles sont chacune aptes à former un palier pour le moyeu 21.

De manière usuelle, on entend, ici, par "chape", une pièce en U qui, outre ses deux branches 25A, 25B, comporte, à la racine de celles-ci, une partie médiane 27.

Dans la forme de réalisation représentée, les deux branches 25A, 25B de la chape 24 sont sensiblement parallèles l'une à l'autre, et elles s'étendent chacune respectivement perpendiculairement à la partie médiane 27 qui les relie.

Elles ont en outre l'une et l'autre sensiblement la même largeur que cette partie médiane 27 et la même épaisseur.

Préférentiellement, et cela est le cas dans la forme de réalisation représentée, l'évidement 26A, 26B de chacune des branches 25A, 25B de la chape 24 est ouvert latéralement, du côté opposé à la partie médiane 27 de cette chape 24.

Pour l'une au moins des branches 25A, 25B de la chape 24, et, en pratique, pour chacune de celles-ci, l'évidement 26A, 26B s'étend sur plus de 180°.

Autrement dit, cet évidement 26A, 268 se referme légèrement sur lui-même, en formant, à son débouché, un col 28A, 28B de largeur inférieure à son diamètre, pour permettre un encliquetage de l'ensemble sur le moyeu 21.

Pour l'une au moins des branches 25A, 25B de la chape 24, et, en pratique, pour chacune de celles-ci, l'évidement 26A, 26B est précédé par un convergent d'engagement 29A, 29B, pour faciliter l'engagement de l'ensemble sur le moyeu 21.

En pratique, pour chacune des branches 25A, 25B de la chape 24, l'évidement 26A, 26B et le convergent d'engagement 29A, 29B s'étendent de manière symétrique de part et d'autre d'un plan médian qui, passant par la ligne médiane des branches 25A, 25B, s'étend perpendiculairement à ces branches 25A, 25B et perpendiculairement à la partie médiane 27, en formant un plan de symétrie pour l'ensemble.

En pratique, également, d'une des branches 25A, 25B à l'autre, les évidements 26A, 26B ont un même diamètre.

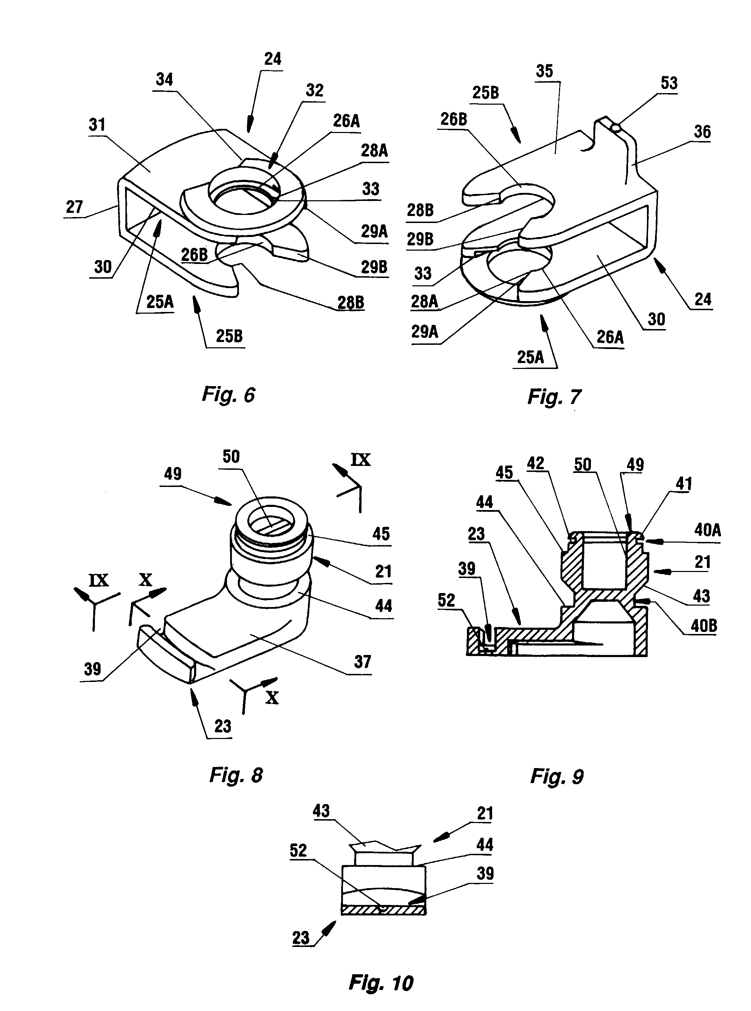

Dans la forme de réalisation représentée, l'évidement 26A de la branche externe 25A de la chape 24 et, en pratique, il en est de même pour le convergent d'engagement 29A qui précède cet évidement 26A, ne concerne qu'une fraction de l'épaisseur de cette branche externe 25A à compter de sa surface interne 30, et, conjointement, cette branche externe 25A comporte, au droit de cet évidement 26A, une rondelle de façade 32, qui s'étend circulairement sur une partie au moins du pourtour de l'évidement 26A, en retrait par rapport à celui-ci, et en recouvrant, à distance, le convergent d'engagement 29A correspondant, et qui, au droit de ce convergent d'engagement 29A, laisse libre, entre elle et la partie de la branche externe 25A présentant ce convergent d'engagement 29A, une fente 33, figure 7.

Dans la forme de réalisation représentée, la rondelle de façade 32 s'étend, localement, en surépaisseur, sur la surface externe 31 de la branche externe 25A.

Par exemple, et tel que représenté, la rondelle de façade 32 ainsi individualisée ne s'étend que sur une partie du pourtour de l'évidement 26A, en étant interrompue par une encoche 34 du côté de celui-ci opposé au convergent d'engagement 29A.

En variante, la rondelle de façade 32 peut se fondre dans l'épaisseur même de la branche externe 25A, en occupant, précisément, une partie de cette épaisseur.

Corollairement, l'évidement 26B de la branche interne 25B de la chape 24 et le convergent d'engagement 29B précédant cet évidement 26B concernent, eux, dans la forme de réalisation représentée, la totalité de l'épaisseur de cette branche interne 25B.

Dans la forme de réalisation représentée, et pour des raisons qui apparaîtront ultérieurement, la chape 24 présente, par ailleurs, en saillie sur la surface externe 35 de sa branche interne 25B, au voisinage de sa partie médiane 27, et, par exemple, tel que représenté, au ras de cette partie médiane 27, une patte 36, qui s'étend sensiblement perpendiculairement à la branche interne 25B, dans la zone médiane, au moins, du bord correspondant de cette branche interne 258, et dont la largeur, comparable à celle des ergots 19 du panneau 11, est inférieure à la longueur des évidements 16 du dormant 15, pour son engagement dans un tel évidement 16.

Par construction, il est fait en sorte que cette patte 36 ait une hauteur suffisante pour traverser de part en part le dormant 15.

Corollairement, le pêne 23 comporte, en correspondance avec cette patte 36, en creux sur sa surface interne 37, c'est-à-dire en creux sur celle de ses surfaces qui est tournée du même côté que le moyeu 21, une rainure 39, par laquelle il est apte à s'engager sur la patte 36 de la chape 24.

Préférentiellement, et cela est le cas dans la forme de réalisation représentée, le moyeu 21 et le pêne 23 sont d'un seul tenant l'un avec l'autre, en formant l'un et l'autre par moulage une seule et même pièce.

Pour coopération avec les paliers formés par les évidements 26A, 26B des branches 25A, 25B de la chape 24, le moyeu 21 comporte, à distance l'un de l'autre, deux tronçons de diamètre réduit 40A, 40B.

Le diamètre de ces tronçons de diamètre réduit 40A, 40B est sensiblement égal à celui des évidements 26A, 26B de la chape 24, tout en étant légèrement inférieur à celui-ci.

En pratique, figure 9, chacun de ces tronçons de diamètre réduit 40A, 40B intervient à la manière d'une fente, entre deux épaulements transversaux.

Pour le tronçon de diamètre réduit 40A, qui est celui le plus proche de l'extrémité libre du moyeu 21, les épaulements 41, 42 correspondants sont droits.

Autrement dit ils s'étendent l'un et l'autre sensiblement perpendiculairement à l'axe du moyeu 21.

En pratique, la distance qui sépare l'un de l'autre ces deux épaulements 41, 42 est sensiblement égale à l'épaisseur de la partie de la branche externe 25A de la chape 24 comportant l'évidement 26A, tout en étant légèrement supérieure à cette épaisseur.

Pour le tronçon de diamètre réduit 40B, seul l'un des épaulements 43, 44 correspondants, à savoir l'épaulement 44 le plus éloigné axialement du tronçon de diamètre réduit 40A, est droit.

L'autre épaulement, et il s'agit donc de l'épaulement 43 le plus proche du tronçon de diamètre réduit 40A, est, lui, dans la forme de réalisation représentée, globalement tronconique.

En outre, le moyeu 21 comporte, transversalement, entre son tronçon de diamètre réduit 40A et son tronçon de diamètre réduit 40B, à proximité du tronçon de diamètre réduit 40A, un épaulement 45, qui, par butée contre la surface interne 46 du panneau 11, figure 4, limite son engagement dans le perçage 22 de ce panneau 11.

Ainsi qu'il est mieux visible sur la figure 5B, seule, donc, émerge, en saillie sur la surface externe 48 du panneau 11, la partie d'extrémité 49 du moyeu 21 comportant son tronçon de diamètre réduit 40A.

En outre, dans cette forme de réalisation, cette partie d'extrémité 49 forme, pour le moyeu 21, et, donc, pour l'ensemble du verrou 14, une tête de commande, en présentant, diamétralement, à la manière de la tête d'une vis, une empreinte 50 propre à sa commande en rotation.

Par exemple, et tel que représenté, cette empreinte 50 est une saignée qui s'étend globalement transversalement.

Quoi qu'il en soit, et ainsi qu'on le notera, la tête de commande du verrou 14 suivant l'invention, ainsi formée par la partie d'extrémité 49 de son moyeu 21, est d'un seul tenant avec ce moyeu 21, en formant de moulage une seule et même pièce avec celui-ci.

Préférentiellement, des moyens d'arrêt débrayables sont prévus entre le pêne 23 et la chape 24.

Dans la forme de réalisation représentée, ces moyens d'arrêt débrayables comportent, sur le pêne 23 en creux sur le fond de la rainure 39 de celui-ci, un dégagement 52, et, sur la chape 24, en saillie sur la tranche de la patte 36 de celle-ci, un bossage 53 propre à coopérer en engagement avec ce dégagement 52.

Enfin, dans la forme de réalisation représentée, le panneau 11 comporte, pour la mise en oeuvre d'un verrou 14, en retrait par rapport à sa surface externe 48, un dégagement 54, qui s'étend au moins pour partie autour de son perçage 22 et par lequel il est apte à recevoir la chape 24 de ce verrou 14, et, plus précisément, la branche externe 25A de cette chape 24, pour le blocage en rotation de cette chape 24.

Par exemple, et tel que représenté, ce dégagement 54 se prolonge sur le bord tombé 18 correspondant du panneau 11, pour recevoir la partie médiane 27 de la chape 24.

Au montage, le moyeu 21 est engagé par en dessous sur le panneau 11, suivant la flèche F1 de la figure 5A, jusqu'à butée de son épaulement 45 contre la surface interne 46 de ce panneau 11.

La chape 24 est ensuite engagée sur la tranche du panneau 11, suivant la flèche F2 de la figure 5B, à la faveur du dégagement 54 que comporte pour elle ce panneau 11.

Au terme de cet engagement, la chape 24 vient s'encliqueter sur le moyeu 21, d'une part, par l'évidement 26A de sa branche externe 25A, qui vient en prise avec le tronçon de diamètre réduit 40A de ce moyeu 21, et, d'autre part, par l'évidement 268 de sa branche interne 25B, qui, lui, vient en prise avec le tronçon de diamètre réduit 40B de ce moyeu 21.

L'ensemble se trouve ainsi dûment maintenu en place sur le panneau 11.

En service, lorsque le panneau 11 est appliqué sur le dormant 15, avec le pêne 23 de son verrou 14 allongé parallèlement à son côté transversal correspondant, la patte 36 de la chape 24 vient s'engager dans l'un des évidements 16 de ce dormant 15, jusqu'à faire saillie au-delà de celui-ci.

Il suffit, ensuite, de faire pivoter d'un quart tour le moyeu 21, pour que le pêne 23 s'engage sous le dormant 15.

En s'engageant sur la patte 36 de la chape 24, le pêne 23 vient alors avantageusement fermer en boucle le verrou 14 sur le dormant 15.

En coopérant en emboîtement l'un avec l'autre, le dégagement 52 et le bossage 53 constituant les moyens d'arrêt débrayables de ce verrou 14 assurent corollairement de manière avantageuse un maintien stable en position de fermeture de ce verrou 14.

Bien entendu, la présente invention ne se limite pas à la forme de réalisation décrite et représentée, mais englobe toute variante d'exécution.

En particulier, le moyeu du verrou suivant l'invention peut comporter radialement en saillie, parallèlement à son pêne, et à niveau avec l'épaulement qu'il comporte pour sa butée contre la surface interne du panneau concerné, une console.

Le domaine d'application de l'invention n'est pas non plus limité à celui des seuls plastrons pour enveloppes électriques, mais s'étend d'une manière plus générale à celui du verrouillage local d'un quelconque panneau mobile sur un quelconque dormant.

## Revendications

1. Verrou pour panneau mobile, du genre comportant un moyeu (21), qui est à engager de manière rotative dans un perçage (22) du panneau (11) à équiper, du côté interne de celui-ci, et un pêne (23), qui, solidaire de ce moyeu (21), fait saillie radialement sur ce dernier, caractérisé en ce qu'il comporte, en outre, une chape (24), qui est à engager sur le panneau (11), par la tranche de celui-ci, et dont les deux branches (25A, 25B) comportent, chacune, en correspondance l'une avec l'autre, un évidement (26A, 26B) de contour circulaire par lequel elles sont chacune aptes à former un palier pour le moyeu (21).

2. Verrou suivant la revendication 1, caractérisé en ce que l'évidement (26A, 26B) de chacune des branches (25A, 25B) de la chape (24) est ouvert latéralement du côté opposé à la partie médiane (27) de cette chape (24).

3. Verrou suivant la revendication 2, caractérisé en ce que, pour l'une au moins des branches (25A, 25B) de la chape (24), l'évidement (26A, 26B) s'étend sur plus de 180°.

4. Verrou suivant l'une quelconque des revendications 2, 3, caractérisé en ce que, pour l'une au moins des branches (25A, 258) de la chape (24), l'évidement (26A, 26B) est précédé par un convergent d'engagement (29A, 29B).

5. Verrou suivant la revendication 4, caractérisé en ce que l'évidement (26A) de la branche externe (25A) de la chape (24) ne concerne qu'une fraction de l'épaisseur de cette branche externe (25A), et cette branche externe (25A) comporte, au droit de cet évidement (26A), une rondelle de façade (32), qui s'étend circulairement sur une partie au moins du pourtour de l'évidement (26A), en recouvrant, à distance, le convergent d'engagement (29A) correspondant, et qui laisse libre, entre elle et la partie de la branche externe (25A) présentant ce convergent d'engagement (29A), une fente (33).

6. Verrou suivant l'une quelconque des revendications 1 à 5, caractérisé en ce que la chape (24) présente, en saillie sur la surface externe (35) de sa branche interne (25B), au voisinage de sa partie médiane (27), une patte (36), et le pêne (23) comporte, en correspondance avec cette patte (36), une rainure (39), par laquelle il est apte à s'engager sur cette patte (36).

7. Verrou suivant l'une quelconque des revendications 1 à 6, caractérisé en ce que des moyens d'arrêt débrayables sont prévus entre le pêne (23) et la chape (24).

8. Verrou suivant les revendications 6 et 7, prises conjointement, caractérisé en ce que les moyens d'arrêt débrayables prévus entre le pêne (23) et la chape (24) comportent, sur le pêne (23), en creux sur le fond de la rainure (39) de celui-ci, un dégagement (52), et, sur la chape (24), en saillie sur la tranche de la patte (36) de celle-ci, un bossage (53) propre à coopérer en engagement avec ce dégagement (52).

9. Verrou suivant l'une quelconque des revendications 1 à 8, caractérisé en ce que le moyeu (20) comporte, à distance de l'un de l'autre, pour coopération avec les paliers formés par les évidements (26A, 26B) des branches (25A, 25B) de la chape (24), deux tronçons de diamètre réduit (40A, 40B).

10. Verrou suivant l'une quelconque des revendications 1 à 9, caractérisé en ce que sa tête de commande, formée par la partie d'extrémité (49) de son moyeu (21), est d'un seul tenant avec ce moyeu (21).

11. Panneau mobile du genre comportant un perçage (22) pour l'engagement du moyeu (21) d'un verrou (14), caractérisé en ce que, pour la mise en oeuvre d'un verrou (14) conforme à l'une quelconque des revendications 1 à 10, il comporte, en retrait par rapport à sa surface externe (48), un dégagement (54), qui s'étend au moins pour partie autour de son perçage (22), et par lequel il est apte à recevoir la chape (24) de ce verrou (14).
